# EUROPEAN PATENT APPLICATION

(11) **EP 1 464 398 A2**
(43) Date of publication of application: **06.10.2004**
(21) Application number: 04008112.7
(22) Date of filing: 02.04.2004
(51) Int. Cl.: B01L 3/00, G01N 35/00

(54) **Chemical analyzer and structure for chemical analysis**

(30) Priority: 02.04.2003 JP 2003098742
(71) Applicant: Hitachi High-Technologies Corporation, Tokyo (JP)
(72) Inventor: Nagaoka, Yoshihiro, Hitachi, Ltd, 1-chome Chiyoda-ku Tokyo 100-8220 (JP); Takenaka, Kei, Hitachi, Ltd, 1-chome Chiyoda-ku Tokyo 100-8220 (JP); Yokobayashi, Toshiaki, Hitachi High-Tech., 882, Ichige Hitachinaka-shi Ibaraki (JP)
(74) Representative: Beetz & Partner Patentanwälte

(57) **Abstract**

An analyzer and a structure for analysis with high performance are provided which can reduce contamination between the reagents when the valve components or a plurality of reagents are included.

The present invention is a chemical analyzer (1) to which a sample is introduced and into which a structure (2) for holding a reagent reacting with the above described sample is housed, including a mechanism for detecting the above described sample after the above described reaction; in which the above described structure includes a reagent cartridge (20) having reagent storing parts for storing a plurality of reagents, a connection part to which the above described reagent cartridge is connected, and a channel cartridge (30) having reagent channels through which a plurality of the above described reagents flow, a sample channel through which the above described testing object flows, and a reaction region where the above described reagent is reacted with the above described testing object.

## Description

### BACKGROUND OF THE INVENTION

The present invention relates to a chemical analyzer.

A microstructure for the amplification test and a method for the same is described in WO 00/78455 as one of the methods for extracting DNA from a liquid sample containing DNA. This apparatus allows a DNA mixture to pass through a glass filter which is used as an inorganic substrate and then also allows a washing fluid and an eluent to pass through the glass filter in order to only recover DNA. The glass filter is provided on a rotatable structure, and reagents such as washing fluids or eluents are contained in respective reagent reservoirs within the same structure. Each of the reagents flows through by a centrifugal force generated by rotation of the structure, and passes through the glass filter by opening a valve which is located in a microchannel connecting each of the reagent reservoir with the glass filter.

An integral fluid operating cartridge is described in JP-A-2001-527220 as one of chemical analyzers for extracting a certain chemical substance such as nucleic acid from a sample containing a plurality of chemical substances and for analyzing the extracted substance. This analyzer is provided with a capturing component within an integral cartridge thereof for capturing a reagent such as a lysis reagent, a washing fluid, or an eluent and nucleic acid. After a sample containing nucleic acid is injected into an inside of the cartridge, the sample and the eluent are mixed with each other. This mixture is allowed to pass through the above described capturing component and then the washing fluid is allowed to pass through the capturing component, and subsequently, the eluent is allowed to pass through the capturing component. The eluent after passing through the capturing component is brought into contact with a PCR reagent and is allowed to flow into a reaction chamber.

### Patent Reference 1

WO 00/78455

### Patent Reference 2

JP-A-01-527220

However, the structure described in the above mentioned WO 00/78455 uses wax and the like which melts with heat, for the operation of the valve, so that the reagent passing through the valve may remain at the valve part and contaminate the recovered DNA. That is, the DNA mixture or the washing fluid remains at the valve part, and the DNA mixture or the washing fluid remaining at the valve part may also flow through the glass filter during a step of passing the eluent through the glass filter by the centrifugal force.

As for the integral fluid operating cartridge described in the above mentioned JP-A-01-527220, when each of the reagents are delivered by a pump, the reagent passes through the capturing component by opening the valves located in the microchannel which connects the each of the reagents with the capturing component. In addition, the valve and the like, which is located in the microchannel between the capturing component and each chamber, switches the flowing direction of the fluid such that the washing fluid among the reagents passing through the capturing component flows into a waste chamber, while the eluent among such reagents flows into a reaction chamber. If a plurality of reagents are delivered by the pump, the reagents tend to remain on the channel wall, especially when an obstruction such as the valve is positioned in the channel. The fluid thus remained never flows again, so that this fluid may contaminate other reagents when this fluid and the other reagents flow into each other. Further, when the flowing directions of the washing fluid and the eluent which have passed through the capturing component are switched by the valve operations in order to allowing them to flow into different cambers, a washing fluid may be mixed into the eluent because the washing fluid previously flowing into the waste chamber contaminates an upstream channel of the valves which is for switching the flowing direction to the reaction chamber.

Therefore, an object of the present invention is to provide a simple chemical analyzer which can solve at least one of the above described problems and extracts a certain chemical substance contained in a liquid sample with high precision.

### BRIEF SUMMARY OF THE INVENTION

For the purpose of solving the above described problems, the present invention provides for an extraction part and a reagent containing part as separated structures, and each of the reagents is previously stored in each of reagent chambers within the reagent containing part.

It is desirable that each of the reagent chambers is in communication with another reagent chamber, especially when the reagent containing part is mounted on the extraction part.

Alternatively, an analysis part and a reagent containing part are provided as separated structures, and further, an analytical reagent containing part which is for containing a certain analytical reagent and other reagent containing parts are provided as separated structures. In this case, each of the reagents is previously stored in each of the reagent chambers within each of the reagent containing parts, and the analytical reagent containing part is kept at a certain temperature which is different from that in the case of other reagent containing part.

Especially when each of the reagent containing part is mounted on the analysis part, it is desirable to communicate each of the reagent chambers with another reagent chamber within the analysis part.

Alternatively, it is particularly desirable to provide for different analytical reagent containing parts or different other reagent containing parts depending on chemical substances to be analyzed, and to perform analysis after mounting these reagent containing parts on the common analysis part.

Therefore, an analyzer and a structure for analysis with high performance are provided, which can reduce contamination between the reagents when the valve components or a plurality of reagents are included.

In particular, the present invention can have the following aspects.

(1) It is provided an analyzer housing a reagent cartridge and a channel cartridge. For example, this is an analyzer provided with a housing part of a reagent cartridge having reagent storing parts for storing doses of a plurality of reagents, a connection part of the reagent cartridge, and a channel cartridge in which a channel is formed (preferably, valveless) for allowing the above described plurality of reagents to flow down therethrough.

In particular, the present invention is a chemical analyzer to which a sample is injected and in which a reagent for reacting with the above described sample is stored, comprising a housing part for housing a structure having a reaction region for reacting the above described sample with the above described reagent, and a mechanism for detecting the above described sample after the above described reaction, wherein the above described structure comprises a reagent cartridge having a reagent storing part for storing the reagent, a connection part to which the above described reagent cartridge is connected, and a channel cartridge having a reagent channel through which the above described reagent flows, a sample channel through which the above described sample flows, and the above described reaction region which is in communication with the above described reagent channel and the above described sample channel.

The above described structure is rotatably mounted, and the above described sample contains nucleic acid, and further, the above described channel cartridge has a capturing part for capturing nucleic acid from the above described sample.

According to such a mechanism in which particularly a reagent cartridge corresponding to an object examination depending on the inspection item is mounted thereon as well as a common channel cartridge, since the reagent have to be carefully treated (such as temperature regulation), only a reagent cartridge which has no troubles is required to be used even if the reagents have some trouble and the channel cartridge does not need to be replaced with new one, so that an efficient examination can be achieved.

It is also provided an analyzer in which the channel cartridge can be used as it is depending on the objects and only the corresponding reagent cartridge is required to be replaced with new one, so that the stock space and the cost can be reduced.

Preferably, it is provided a valveless structure in which an inside of the reagent cartridge communicates with an inside of the channel cartridge when performing the analysis. In particular, when the above described reagent cartridge and the above described channel cartridge are mounted in the above described housing part, the above described first reagent storing part of the above described reagent cartridge and the above described second reagent storing part of the above described reagent cartridge are in communication with each other through the above described reagent channel or the above described sample channel formed in the above described channel cartridge.

(2) It is also provided the analyzer described in (1), wherein the above described reagent cartridge comprises a plurality of reagent cartridges containing the reagents, and wherein a first reagent cartridge is kept at a lower temperature than a second reagent cartridge and then housed in the above described analyzer.

Alternatively, it is provided the analyzer described in (1), wherein the above described channel cartridge has a reagent storing part for storing the reagent, and wherein the above described channel cartridge is kept at a lower temperature than the above described reagent cartridge and then housed in the above described analyzer.

(3) Preferably, it is also provided the analyzer described in (1) comprising a plurality of the above described reagent cartridges.

For example, it is provided the analyzer described in (1), wherein the above described cartridge comprises a plurality of reagent cartridges containing the reagents, wherein the first reagent cartridge is disposed opposite a first region of the above described channel cartridge, and wherein the second reagent cartridge is disposed opposite a second region of the above described channel cartridge.

Alternatively, it is provided the analyzer described in (1), wherein the above described reagent cartridge comprises a plurality of reagent cartridges containing the reagents, wherein the above described second reagent cartridge is disposed opposite the above described channel cartridge, and wherein the first reagent cartridge is disposed opposite the above described second region cartridge.

(4) In addition, each of the cartridges per se for chemical analysis also has the following features. That is, the present invention is a structure for chemical analysis which has a sample introduction part including a certain chemical substance, a reagent storing part for storing a reagent reacting with the above described sample, and a capturing part for capturing the above described chemical substance from the reagent reacted with the above described reagent, wherein the above described structure comprises a reagent cartridge having reagent storing parts for storing a plurality of reagents, a connection part to which the above described reagent cartridge can be connected, and a channel cartridge having a reagent channel through which the above described reagent flows, a sample channel through which the above described sample flows, and the above described reaction region which is in communication with the above described reagent channel and the above described sample channel.

As for the individual components of the present invention, it is provided a channel structure comprising a connection part which can connect to a reagent structure having a reagent storing part for storing a reagent, a reagent channel through which the above described reagent supplied via the above described connection part flows, a sample channel through which a sample containing a certain chemical substance flows, a reaction region through which the above described reagent channel and the above described sample channel are in communication with each other, and a capturing part for capturing the above described 5 chemical substance from the above described sample which has reacted with the above described reagent. This may be a channel structure capable of comprising a structure for chemical analysis, which has a introduction part of a sample including a certain chemical substance, captures the certain chemical substance from the above described sample thus introduced, and retains a reagent to be reacted with the above described sample.

Alternatively, it is provided a reagent structure comprising a connection part which is connectable to a channel structure having a reagent channel through which a reagent flows, a sample channel through which a sample containing a certain chemical substance flows, and the above described reaction region through which the above described reagent channel and the above described sample channel are in connection with each other, a reagent storing part for storing the above described reagent, and a channel for introducing the above described stored reagent into the above described channel structure. This may be a reagent structure capable of comprising a structure for chemical analysis, which has a introduction part of a sample including a certain chemical substance, captures the certain chemical substance from the above described sample thus introduced, and retains a reagent to be reacted with the above described sample.

Other objects, features and advantages of the invention will become apparent from the following description of the embodiments of the invention taken in conjunction with the accompanying drawings.

### BRIEF DESCRIPTION OF THE SEVERAL VIEWS OF THE DRAWING

Fig. 1 is a general view of a genetic testing apparatus according to one embodiment of the present invention;
Fig. 2 is a schematic view of a testing module according to one embodiment of the present invention;
Fig. 3 is a schematic view of a reagent cartridge according to one embodiment of the present invention;
Fig. 4 is a schematic view of a testing cartridge according to one embodiment of the present invention;
Fig. 5 is a cross sectional view of a reagent cartridge and a testing cartridge according to one embodiment of the present invention;
Fig. 6 is a cross sectional view of a testing module according to one embodiment of the present invention;
Fig. 7 is an illustration describing an operation procedure according to one embodiment of the present invention;
Fig. 8 is an illustration describing an operation procedure within a genetic diagnosis apparatus according to one embodiment of the present invention;
Fig. 9 is an illustration describing an operation procedure within a genetic diagnosis apparatus according to one embodiment of the present invention;
Fig. 10 illustrates operations of a reagent cartridge and an analyzing cartridge according to one embodiment of the present invention;
Fig. 11 illustrates operations of a reagent cartridge and an analyzing cartridge according to one embodiment of the present invention;
Fig. 12 illustrates operations of a reagent cartridge and an analyzing cartridge according to one embodiment of the present invention;
Fig. 13 illustrates operations of a reagent cartridge and an analyzing cartridge according to one embodiment of the present invention;
Fig. 14 illustrates operations of a reagent cartridge and an analyzing cartridge according to one embodiment of the present invention;
Fig. 15 illustrates operations of a reagent cartridge and an analyzing cartridge according to one embodiment of the present invention;
Fig. 16 illustrates operations of a reagent cartridge and an analyzing cartridge according to one embodiment of the present invention;
Fig. 17 illustrates operations of a reagent cartridge and an analyzing cartridge according to one embodiment of the present invention;
Fig. 18 is a cross sectional view of a testing module according to one embodiment of the present invention;
Fig. 19 is a top view of an amplification reagent cartridge, a reagent cartridge, and an analyzing cartridge according to one embodiment of the present invention;
Fig. 20 is a top view of an amplification reagent cartridge, a reagent cartridge, and an analyzing cartridge according to one embodiment of the present invention;
Fig. 21 is a cross sectional view of an amplification reagent cartridge, a reagent cartridge, and a testing cartridge according to one embodiment of the present invention;
Fig. 22 is a cross sectional view of a testing module according to one embodiment of the present invention; and
Fig. 23 is a top view of a reagent cartridge and an analyzing cartridge according to one embodiment of the present invention.

### DETAILED DESCRIPTION OF THE INVENTION

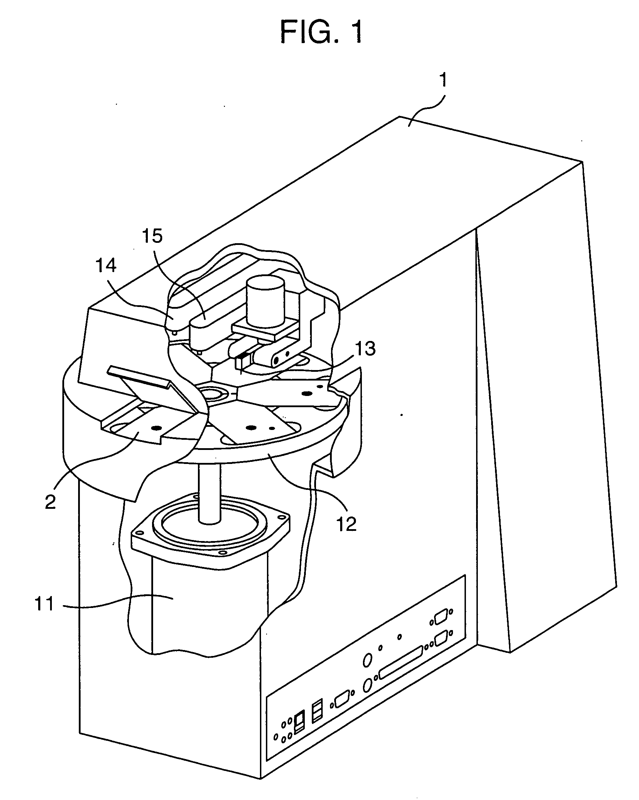

One embodiment of a genetic testing apparatus according to the present invention will now be described with reference to Figs. 1 to 17.

Fig. 1 shows a general view of a genetic testing apparatus according to the present invention. A gene analysis apparatus 1 has a holding disc 12 which is rotatably supported by a motor 11, a plurality of testing modules 2 disposed on the holding disc 12, a perforator 13 for controlling a flow of liquid, a heating device 14, and a detection device 15. An operator prepares for a testing module 2 corresponding to an object to be tested, and attaches the module 2 to the holding disc 12 for starting up the genetic testing apparatus 1.

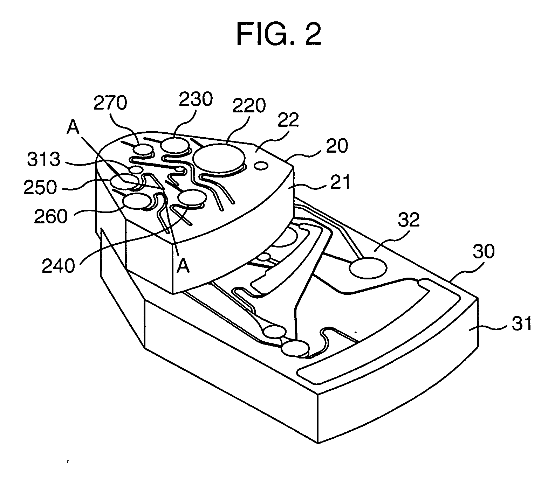

Fig. 2 shows a schematic view of the testing module 2. The testing module 2 comprises a reagent cartridge 20 having a reagent cartridge body 21 to which a transparent reagent cartridge cover 22 is joined and a testing cartridge 30 having a testing cartridge body 31 to which a transparent testing cartridge cover 32 is joined, the reagent cartridge 20 being attached to the testing cartridge 30.

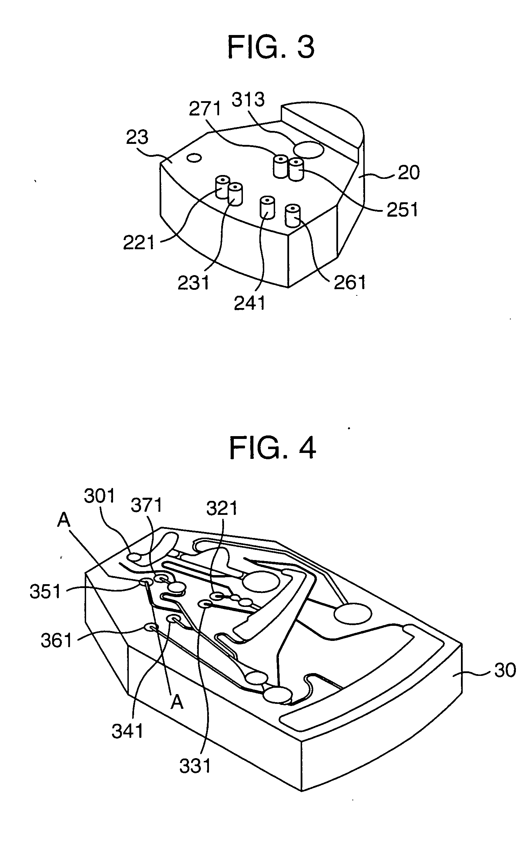

Reagents are previously dispensed into reagent chambers 220, 230, 240, 250, 260, and 270 respectively in a predetermined amount. An underside of the reagent cartridge 20 (Fig. 3) is provided with reagent outlets 221, 231, 241, 251, 261, and 271 which communicate with the reagent chambers respectively, and when the reagent cartridge 20 is once attached to the testing cartridge 30, these outlets are respectively connected to reagent inlets 321, 331, 341, 351, 361, and 371 provided on the testing cartridge 30 as shown in Fig. 4. At a time of attaching the reagent cartridge 20 to the testing cartridge 30, the reagent chambers communicates with an inside of the testing cartridge through the reagent outlets and the corresponding reagent inlets.

Therefore, according to this embodiment, it is provided a chemical analyzer to which a sample is injected, and in which a testing module 2 being a structure for retaining a reagent to be reacted with the sample is housed, and which has a detection device 15 for the above described sample, wherein the testing module 2 comprises a reagent cartridge 20 having reagent storing parts for storing a plurality of reagents, a connection part to which the reagent cartridge is connected, and a testing cartridge 30 which is a channel cartridge having a reagent channel through which a plurality of the above described reagents flow down, a sample channel through which the above described testing object flows down, and a reaction region in which the above described reagent and the above described testing object react with each other.

The above described testing module is rotatably mounted, and the above described testing object contains genes, and further, the above described channel cartridge has a capturing part for capturing the genes from the above described testing object and a retaining part for retaining the above described captured genes.

According to such a mechanism in which particularly a reagent cartridge 20 corresponding to an object examination depending on the inspection item is mounted thereon as well as a common channel testing cartridge 30, since the reagent have to be carefully treated (such as temperature regulation), only a reagent cartridge 20 which has no troubles is required to be used even if the reagents have some trouble and the testing cartridge 30 which is a channel cartridge does not need to be replaced with new one, so that an efficient examination can be achieved.

It is also provided an analyzer in which the testing cartridge 30 can be used as it is depending on the objects and only the corresponding reagent cartridge 20 is required to be replaced with new one, so that the stock space and the cost can be reduced.

Preferably, it is provided a valveless structure in which an inside of the reagent cartridge 20 communicates with an inside of the testing cartridge 30 when performing the analysis. In particular, when the above described reagent cartridge and the above described testing cartridge are mounted, one reagent chamber of the above described reagent cartridge and the other reagent chamber of the above described reagent cartridge are disposed such that these chambers provide a communicating space through a first channel formed in the testing cartridge 30.

In addition, a cartridge per se also has the following features. That is, a cartridge within a structure for chemical analysis comprises a reagent cartridge 30 having reagent storing parts for storing a plurality of reagents and a connection part to which the reagent cartridge 30 is connected, and also comprises a testing cartridge 20 having a reagent channel through which a plurality of the above described reagents are flow down, a sample channel through which the above described testing object flows down, and a reaction region where the above described reagent and the above described testing object are reacted with each other.

Individual cartridges also have some features as follows. That is, a testing cartridge comprises a connection part which is connectable to a reagent cartridge being a reagent structure having a reagent storing part for storing a reagent and to which the reagent within the above described reagent storing part is supplied, an inlet for injecting a sample containing a certain chemical substance, a separation part for separating a separated sample containing a gene which is a testing object from the sample injected from the above described inlet, a first reaction part for introducing a first reagent supplied from a first connecting portion of the above described connection part and the above described separated sample to allow 5 them to react with each other, a gene capturing part for capturing the above described gene from the above described separated sample after the above described reaction, a washing reagent channel for introducing a washing reagent supplied from a second connecting portion of the above described connection part into the above described gene capturing part, an eluent channel for introducing an eluent supplied from a third connecting portion of the above described connection part into the above described gene capturing part, and a retaining part for retaining the above described eluted gene

In addition, a reagent cartridge capable of comprising a cartridge for chemical analysis which has an introduction part of a sample including a certain chemical substance, which captures the certain chemical substance from the above described sample thus introduced, and which contains a reagent to be reacted with the above described sample, comprises a reagent channel through which a plurality of the above described reagents flow down, a sample channel through which the above described testing object flows down, a connection part which is connected to a testing cartridge 20 having a reaction region where the above described reagent and the above described testing object react with each other, a reagent storing part for storing the plurality of reagents, and a channel for introducing the above described stored reagent into the above described testing cartridge 20.

It is also provided a structure wherein the reagent cartridge is disposed on the testing cartridge.

Specifically, an inlet for injecting a sample is provided on the testing cartridge for example, the above described inlet being provided so as to be covered by the above described reagent cartridge at a time of mounting the reagent cartridge on the testing cartridge when viewing from a building-up direction. Thus, it is possible to prevent the sample from diffusing and flowing out of the inlet during the rotation of the cartridge.

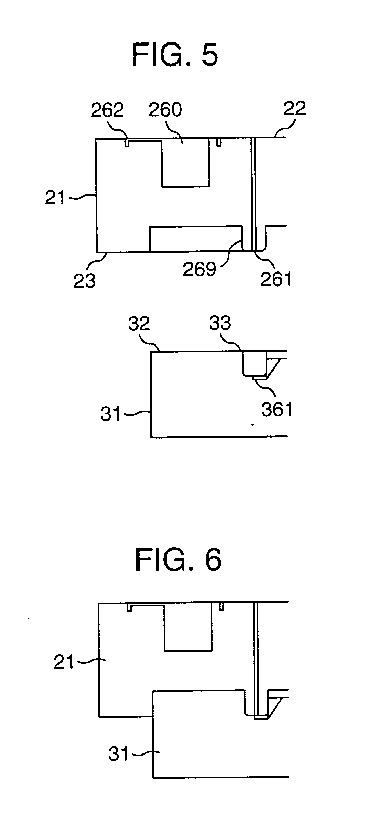

Fig. 5 shows a principal part of a longitudinal sectional view of the reagent cartridge 20 and the,testing cartridge 30 taking along a line A-A in Figs. 2 and 4, and Fig. 6 is a longitudinal sectional view taking along the above described line A-A in which the reagent cartridge 20 is attached to the testing cartridge 30. A reagent cartridge protecting sheet 23 is adhered to an under surface of the reagent cartridge 20 in order to prevent leakage or evaporation of a reagent which has previously been stored within the reagent cartridge 20. A cover to an outlet of the reagent as described above is one of the features of the present invention. In addition, a testing reagent cartridge protecting sheet 33 is adhered to an upper surface of the testing cartridge 30 in order to prevent contamination of an inside of the testing cartridge 30.

An operator strips off the reagent cartridge protecting sheet 23 and the testing reagent cartridge protecting sheet 33 before attaching the reagent cartridge 20 to the testing cartridge 30. A projection (269 in Fig. 5, for example) comprising the reagent outlet is fitted into the reagent inlet to position both of the reagent outlet and the reagent inlet, thus, the reagent never leaks out of the testing cartridge. Alternatively, leaving an adhesive on a surface of the testing cartridge cover 32, to which the testing cartridge protecting sheet is adhered, may also results in prevention of leakage of the reagent.

The projection (269 in Fig. 5, for example) provided on the reagent cartridge as described above may also be provided on the testing cartridge side.

The convexo-concave structure as described above is one of the features of the present invention.

The embodiment features that the reagent cartridge 30 is provided with a projection which is in communicating with the reagent chamber, while the testing cartridge houses this projection and is provided with a concave inlet part communicating with a channel corresponding to the above described projection. On the other hand, the above described projection may also be formed at the testing cartridge side and the inlet part may also be formed at the reagent cartridge side.

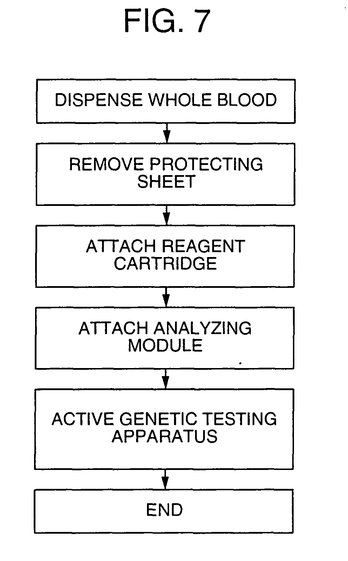

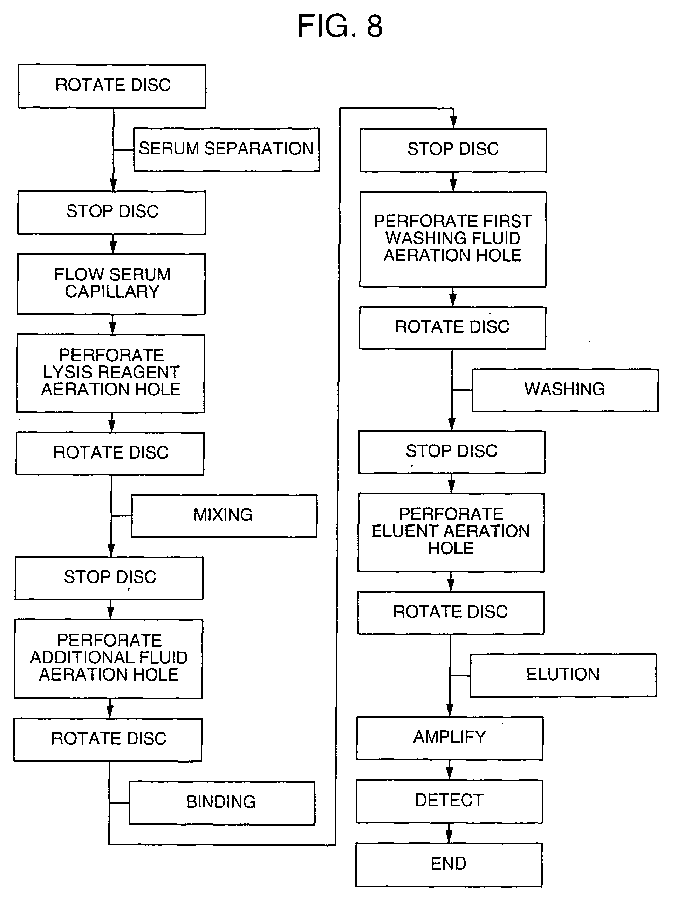

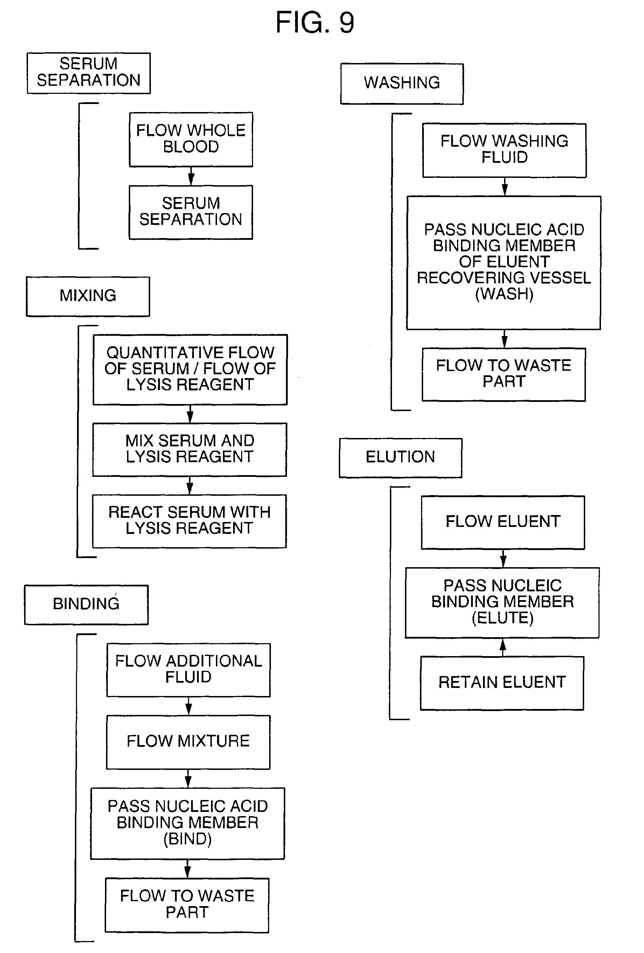

Next, operations for extracting and analyzing viral nucleic acid by using whole blood as a sample will be described. Fig. 7 shows a procedure for operating a genetic testing apparatus according to the present invention conducted by an operator, and Figs. 8 and 9 show an operating procedure conducted within the genetic testing apparatus.

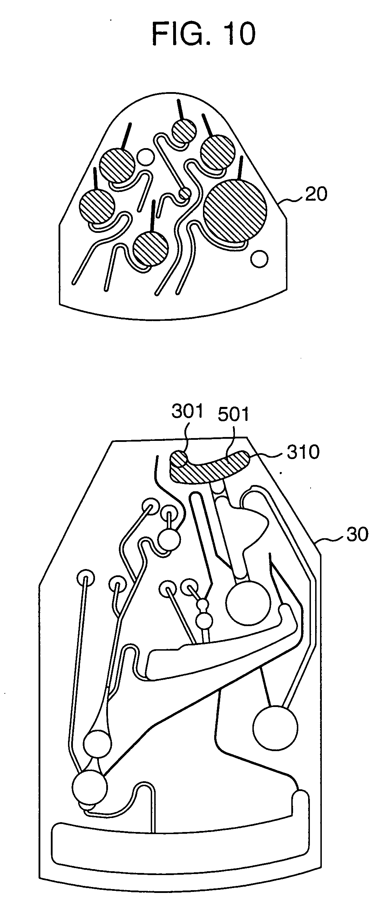

An operator injects a whole blood which has been collected by a blood vacuum tube and the like into a sample chamber 310 from a sample inlet 301 of a testing cartridge 30 (Fig. 10), and strips off a reagent cartridge protecting sheet 23 and a testing cartridge protecting sheet 33 illustrated in Fig. 5 before attaching a reagent cartridge 20 to a testing cartridge 30 (Fig. 2). At this moment, the sample inlet 301 of the testing cartridge 30 is covered by the reagent cartridge 20, so that the sample never leaks out of the testing cartridge 30 hereafter. Alternatively, it is possible to provide a sample aeration hole 313 penetrating the reagent cartridge 20 (Figs. 2 and 3), and to attach a filter thereto which allows air to pass through thereof and does not allow mist to pass through thereof in order to achieve aeration when the sample flows.

A number of analyzing modules 2 thus fabricated are attached to a holding disc 12 as required and then the genetic testing apparatus 1 is activated. Consequently, a viral gene is extracted from the whole blood and finally the gene is detected.

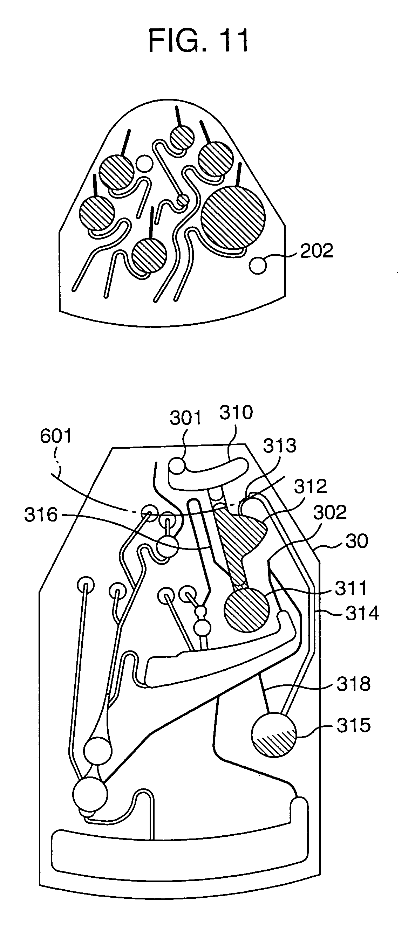

Figs. 11 to 17 show a flowing state of a fluid at each operation within the genetic testing apparatus 1.

After the whole blood 501 is injected, the holding disc 12 is rotated by a motor 11. The whole blood which has been injected into the sample chamber 310 flows toward a periphery side by a centrifugal force generated by rotation of the holding disc 12, and fills a hematocyte storing chamber 311 and a serum quantifying chamber 312, while a surplus of the whole blood flows into a whole blood waste chamber 315 from an overflow capillary channel 313 through an overflow thick tube channel 314 (Fig. 11). The whole blood waste chamber 315 is provided with a whole blood wasting aeration channel 18, through which air can freely access to the whole blood waste chamber 315 from a reagent cartridge aeration hole 202 via the testing cartridge aeration hole 302. Since a connection part provided from the overflow capillary channel 313 to the overflow thick tube channel 314 comprises a huge expansion part and is also positioned at an innermost periphery of the overflow capillary channel 313 (a radial position 601), a flow of the whole blood will stop at the above described connection part while filling the overflow capillary channel 313. Therefore, a fluid level of the serum quantifying chamber 312 also reaches the radial position 601 since the fluid cannot exist within an inner side of the radial position 601. In addition, the whole blood also flows into a serum capillary 316 which branches off from the serum quantifying chamber 312, in which an innermost portion of the whole blood also reaches the radial position 601.

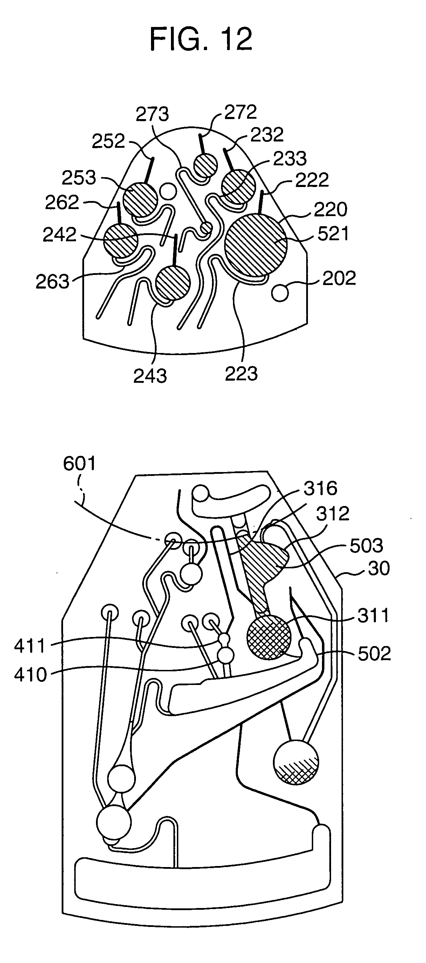

As the holding disc 12 continues to rotate, the whole blood 501 separates into hematocyte and serum (centrifugation), and the hematocyte 502 is transferred to the hematocyte storing chamber 311 at the periphery side. Thus, the serum quantifying chamber 312 will contain only the serum 503 (Fig. 12).

At a time of performing a series of the above described serum separating operations, the aeration holes 222, 232, 242, 252, 262, and 272 of the respective reagent chambers on the reagent cartridge 20 are covered with the reagent cartridge cover 22 (Fig. 5) so that air cannot flow thereinto. Although each of the reagents tends to flow out of the periphery side of the reagent chamber due to the centrifugal force, a pressure within the reagent chamber reduces to a certain level balancing with the centrifugal force due to prevention of air from flowing into the chamber, so that the reagent can not flows out. However, as the centrifugal force increases with the rotational frequency, a pressure within the reagent chamber gradually decreases, and when the pressure reaches below a saturated vapor pressure of the reagent, cavity is generated. Therefore, it is provided a channel structure as shown in Fig. 12 (return channels 223, 233, 243, 253, 263, and 273) in which a reagent flowing out of the periphery side of each reagent chamber is allowed to return to an inside thereof, and consequently, a pressure within the reagent chamber is ) prevented from decreasing and generation of bubbles is also prevented. Thus, each of the reagents remains within the reagent chamber and does not flow out.

After rotating the holding disc 12 for a predetermined time to complete the serum separating operation, the testing module 2 is stopped. At this time, a portion of the serum 503 within the serum quantifying chamber 312 flows into the serum capillary 316 due to a surface tension, and further flows into a mixing part inlet 411 which is a connection part between a mixing part 410 ant the serum capillary 316 and fills the serum capillary 316.

Subsequently, a perforator 13 perforates one after another the aeration hole at an upper stream portion of the respective reagent chambers and activates the motor 11, and then respective reagent are allowed to flow by the centrifugal force.

Operations after the completion of the serum separation will be described below.

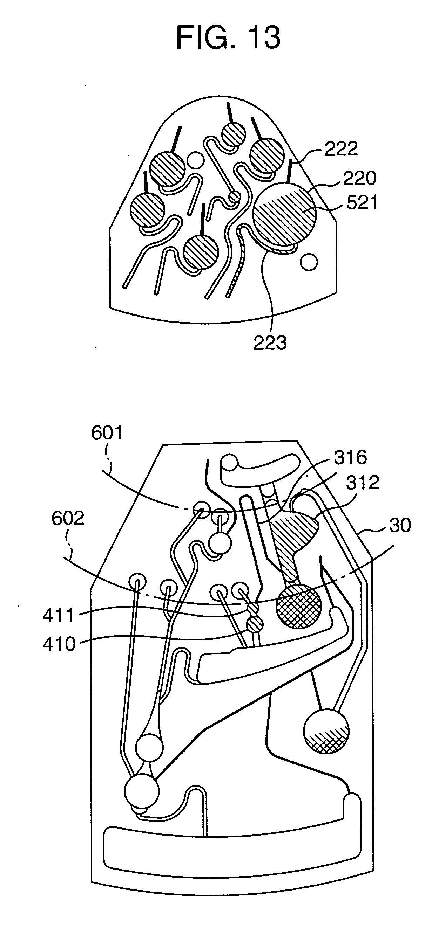

A lysis reagent 521 for lysing viral membrane protein included tin the serum is dispensed in a lysis reagent chamber 220. Once the perforator 13 perforates a lysis reagent aeration hole 222 and then activates the motor 1, the lysis reagent 521 flows from the lysis reagent chamber 220 through a lysis regent return channel 223 into the mixing part 410 due to the centrifugal force. Since an innermost periphery side of the serum within the serum quantifying chamber 311 (a radial position 601 at the completion of the serum separation) is positioned inward from the mixing part inlet 411 (a radial position 602), the serum within the serum quantifying chamber 312 and serum capillary 316 flows into the mixing part 410 from the mixing part inlet 411 (Fig. 13) because of a head difference created by the centrifugal force. The mixing part 410 is fabricated from a member for mixing the serum and the lysis reagent. For example, the member may be a porous filter made from a resin, glass, papers and the like, or fibers, or alternatively, projections made from silicon or metals fabricated by etching or machining.

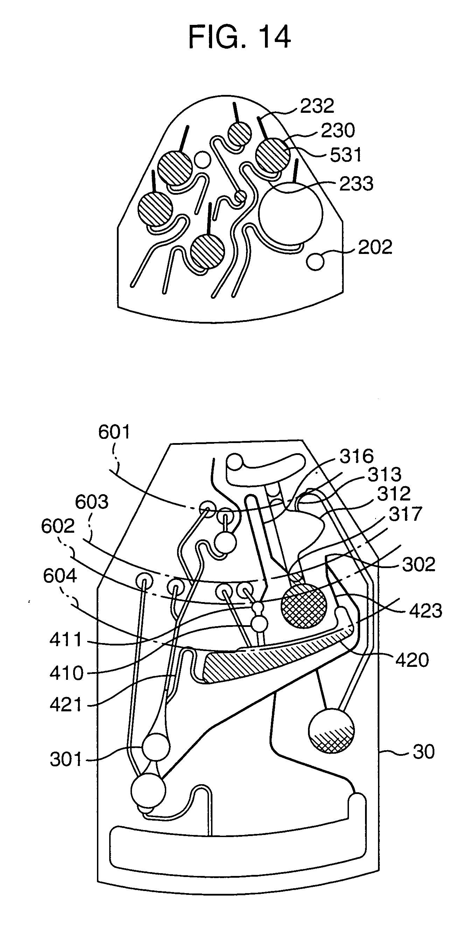

The serum and the lysis reagent are mixed with each other in the mixing part 410 and then flow into a reaction chamber 420 (Fig. 14). The reaction chamber 420 is provided with an aeration channel 423 for the reaction chamber 420, through which air can freely access an inside of the reaction chamber 420 from the reagent cartridge aeration 202 via the testing cartridge aeration 302. Since a branched part 317 (a radial position 603) between the serum quantifying chamber 312 and the serum capillary 316 is positioned inward from the mixing part inlet 411 (a radial position 602), all of the serum within the serum capillary 316 flows into the mixing part 410 because of the siphon effect. On the other hand, since the serum within the serum quantifying chamber 312 flows into the serum capillary 316 by the centrifugal force, the serum continues to flow into the mixing part 410 until a level of the serum within the serum quantifying chamber 312 reaches the branched part 317 (a radial position 603), and once the serum level reaches the branched part 317, air flows into the serum capillary 316 to empty thereof and complete the flowing operation. That is, the serum within the serum quantifying chamber 312, the overflow capillary channel 313, and the serum capillary channel 316 between the radial positions 610 and 613 at a time of completing the serum operations flows into the mixing part 410 and is mixed with the lysis reagent.

Accordingly, when serum quantifying chamber 312 from the radial position 601 to the radial position 603, the overflow capillary channel 313, and the serum capillary channel 316 between the radial positions 610 and 613 are designed to have a predetermined volume (serum requirement), the serum to be used for the analysis can be quantified even if a ratio of serum to whole blood is different from one whole blood sample to another. For example, if 500 µl of whole blood is dispensed under the condition that a volume of the hematocyte storing chamber is designed to be 250 µl and the serum requirement is designed to be 200 µl, then 50 µl of the whole blood overflows into the whole blood waste chamber 315 and 450 µl of the remaining separates into serum and hematocytes, and then 200 µl of the separated serum flows out into the mixing part 410. That is, 450 µl of the whole blood sample including 200 µl or more of the serum can be analyzed by the device according to the present invention. As for a whole blood sample in which a percentage of serum is low, a volume of the hematocytes storing chamber may be increased and an amount of the whole blood sample may also be increased.

The serum and lysis reagent thus mixed are reacted with each other in the reaction chamber 420. Since a fluid level within the reaction chamber 420 after inflow of a mixture of serum and lysis reagent into the reaction chamber 420 is positioned outward from an innermost periphery (a radial position 604) of a reaction fluid channel 421, the mixture can not exceed the innermost portion of the reaction fluid channel 421, so that the mixture is retained within the reaction chamber 420 during the rotation.

The lysis reagent lyses a membrane from a virus or bacterium included in the serum and elutes nucleic acid, and in addition, facilitates binding of the nucleic acid to a nucleic acid binding member 301. For example, guanidine hydrochloride may be used for 5 the elution and binding of DNA, and guanidine thiocyanate may be used for RNA, and further, a filter of porous material made from quartz or glass and of fibers can be used as the nucleic acid binding member.

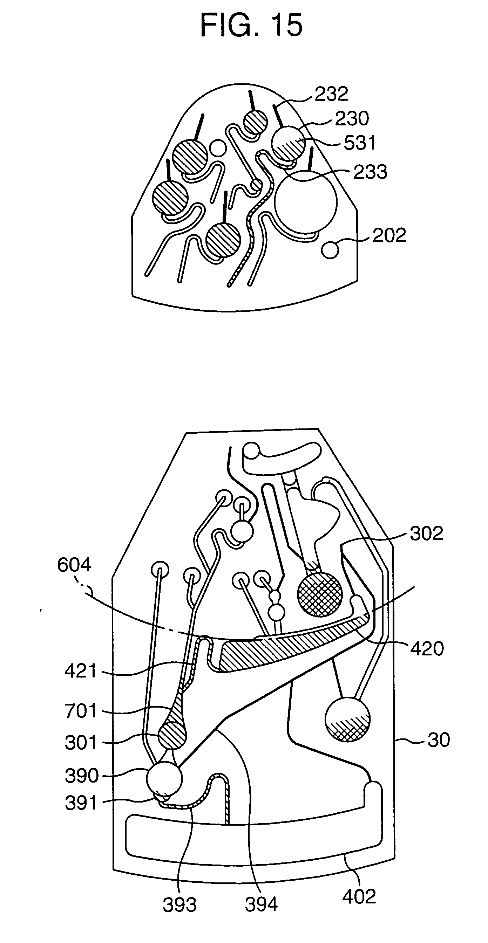

After the serum and the lysis reagent are retained within the reaction chamber 420, the motor 11 is stopped, and then an additional fluid aeration hole 232 is perforated by the perforator 13 in order to supply air into an additional fluid chamber 230. Once the motor 11 is activated again, an additional fluid 531 flows from the additional fluid chamber 230 through an additional fluid return channel 233 into the reaction chamber 420 because of the centrifugal force, so that a fluid level of the mixture within the reaction chamber shifts toward an inner side (Fig. 15). ) When the fluid level reaches the innermost periphery portion (a radial position 604) of the reaction fluid channel 421, the mixture exceeds and flows out of the innermost periphery portion of the reaction fluid channel, and further flows into the nucleic acid binding member 301 through a confluence channel 701. As the additional fluid, the above described lysis reagent can be used for example.

As for some of the samples, a wetting property of the mixture is favorable and the mixture may flow through the reaction fluid channel 421 because of the capillary phenomenon at a time of stopping the rotation, so that the additional fluid 531 is not required.

Accordingly, as the mixture of lysis reagent and serum passes through the nucleic acid binding member, the nucleic acid binds to the nucleic acid binding member 301, and the liquid flows into an eluent recovering chamber 390.

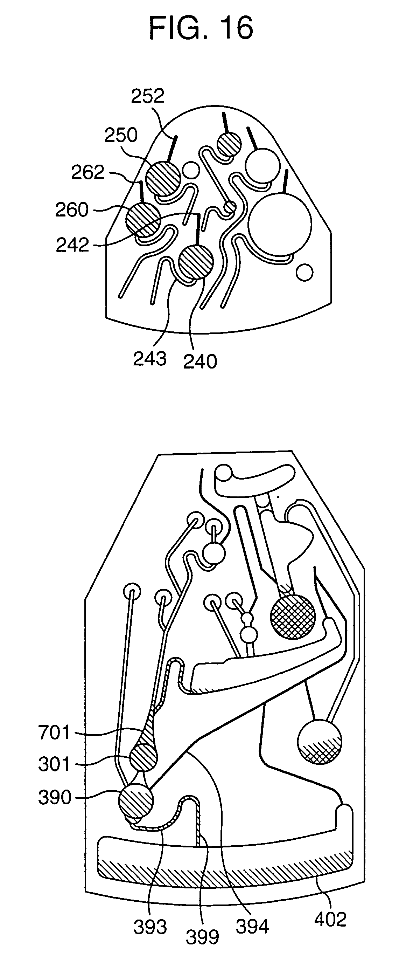

The eluent recovering chamber 390 is provided with an aeration channel 394 for the eluent recovering chamber, through which air can freely access an inside of the chamber 390 from the reagent cartridge aeration hole 202 via the testing cartridge aeration hole 302. Although a waste fluid 391 after passing through the nucleic acid binding member 301 is once retained within the eluent recovering chamber 390 because of the presence of a waste return channel 393 as in the case of the mixing chamber 420, since a volume of the eluent recovering chamber 390 is sufficiently smaller than an amount of the waste fluid, the waste fluid exceeds the innermost periphery of the waste return channel 393 and flows into the waste storing chamber 402 through a waste flow out channel 399. (Fig. 16).

Then, the motor 11 is stopped, and a first washing fluid aeration hole 242 is perforated by the perforator 13 in order to supply air into a first washing fluid chamber 240, and then the motor 11 is activated again. Consequently, the first washing fluid flows from the first washing fluid chamber 240 through the first washing fluid return channel 243 and through 5 the confluence channel 701 into the nucleic acid binding member 301 because of the centrifugal force, and washes out an unwanted component such as protein adhered to the nucleic acid binding member 301. The above described lysis reagent or the lysis reagent in which a salt concentration is reduced can be used as the first washing fluid, for example. The waste fluid, after washing, flows out into the waste storing chamber 402 through the eluent recovering chamber 390 as in the case of the above described mixture.

The same washing operation is repeated several times. For example, following the first washing fluid, a second washing fluid aeration hole 252 is perforated by the perforator 13 with the motor stopped in order to supply air into a second washing ) fluid chamber 250, and then the motor 11 is activated again to wash out an unwanted component adhered to the nucleic acid binding member 301. Ethanol or an aqueous solution of ethanol can be used as the second washing fluid.

Similarly, a third washing fluid aeration hole 262 is perforated in order to supply air into a third washing fluid chamber 260. The third washing fluid directly flows into the eluent recovering chamber 390, and washes out some components such as salts adhered to the eluent recovering chamber 390. Sterilized water or an aqueous solution whose pH is adjusted to 7 to 9, for example, can be used as the third washing fluid.

After washing the nucleic acid binding member 301 and the eluent recovering chamber 390 as described above, this process proceeds to a step of eluting nucleic acid.

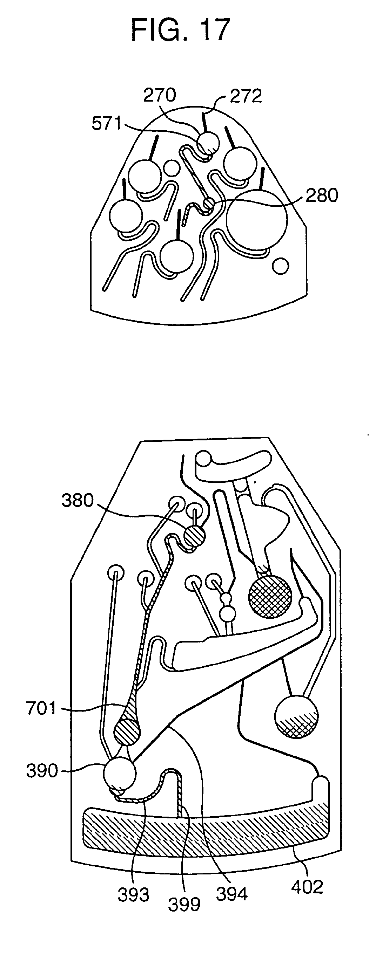

That is, an eluent aeration hole 272 is perforated by the perforator 13 with the motor stopped in order to supply air into the eluent chamber 370 before activating the motor 11 again, and then an eluent 571 is allowed to flow into the nucleic acid binding member 301 (Fig. 17). The eluent is a fluid for eluting nucleic acid from the nucleic acid binding member 301, so that water or an aqueous solution whose pH is adjusted to 7 to 9 can be used. For the purpose of easier elution, the eluent is preferably heated above 40 degrees. The heating device 14 in Fig. 1 may be used for heating, that is, light may be illuminated above the eluent recovering chamber 390. Nucleic acid thus recovered is removed therefrom and injected into the detection device to amplify and detect the nucleic acid.

Alternatively, the amplification and detection within the eluent recovering chamber 390 may be achieved by using an amplification fluid as the eluent 571. That is, an amplification fluid aeration hole 272 is perforated by the perforator 13 with the motor stopped in order to supply air into an amplification fluid storing chamber 270 before 5 activating the motor 11 again, and then the amplification fluid 571 is allowed to flow (Fig. 17). The amplification fluid 571 flows through an enzyme reagent chamber 280 containing an enzyme reagent into an enzyme reagent mixing chamber 380 along with the enzyme reagent, and after the amplification reagent is once mixed with the enzyme reagent, the mixture passes through the nucleic acid binding member 301 for elution of the nucleic acid. An amount of the fluid which has eluted the nucleic acid is smaller than a volume of the eluent recovering chamber 390, and this fluid can not exceed the innermost periphery of the waste return channel 393. Thus, the fluid is retained within the eluent recovering chamber. The amplification fluid is a reagent for detecting nucleic acid by amplifying thereof, and includes deoxynucleoside triphosphate and a fluorescence reagent. Depending on a way of amplification, the heating device 14 is used and light is illuminated above the eluent recovering chamber 390 to heat thereof, and then nucleic acid is amplified within the eluent recovering chamber 390.

Next, the detection device 15 is transferred above the eluent recovering chamber 390, and for example a fluorescence level is detected.

According to the present invention, an operation of dispensing the reagent is eliminated and there is no danger of contaminating the reagent due to an inadequacy in the work. In addition, it does not need to provide a valve along the channel in order to control the flow of each reagent, so that the fluid never remains at the valve part within the channel. Therefore, the contamination by the reagents during the front end process can be prevented, and a certain component such as nucleic acid included in the fluid sample can be extracted with high purity and thus can be analyzed with high precision.

In addition, according to the present invention, the reagent cartridge and the testing cartridge are provided separately. Therefore, if an amount of the reagent is different from one testing item to another, only the reagent cartridge can be replaced with another appropriate cartridge with the testing cartridge unchanged, so that it is possible to reduce production costs.

Further, only the reagent cartridges must be stocked in accordance with the number of testing items, while the number of testing cartridges to be stocked can be smaller, therefore, the stock space can be reduced. Especially, when the temperature control is required for storing the reagents, only the reagent cartridges can be subjected to the temperature control, so that a space required for the temperature control can also be reduced.

Also, even when the reagents have some problems due to the blackout for example, only the reagent cartridge can economically be purchased.

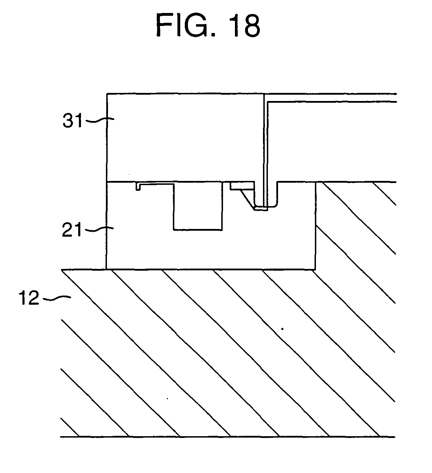

In the embodiment shown in Fig. 2, the reagent cartridge 20 is placed on the testing cartridge 30. However, if the reagent cartridge body 21 is disposed under the testing cartridge body 31 as shown in Fig. 18, the reagent cartridge body 21 can surely be retained on the holding disc.

In this manner, placement of the reagent cartridge beneath the testing cartridge is one of the features of the present invention. When a width of the testing cartridge is larger than that of the reagent cartridge, the reagent cartridge can be supported. Therefore, damage to and detachment of the devices associated with the rotation can be minimized.

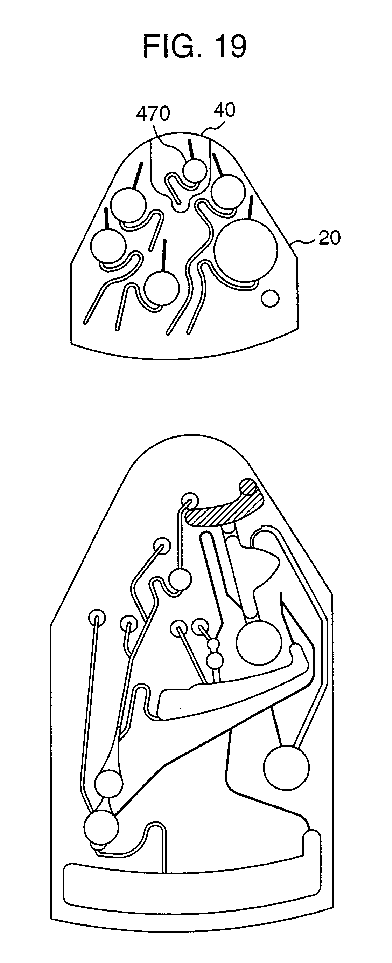

In addition, in the embodiment shown in Fig. 2, all of the reagents are stored in an integral reagent cartridge 20. However, the amplification reagent among those reagents requires to be stored at a low temperature. To solve this problem, as shown in Fig. 19, an amplification reagent cartridge 40 having only an amplification reagent chamber 470 as a separate cartridge is separated from the reagent cartridge 20 to control only a temperature of the amplification reagent cartridge 40 as required.

Specifically, a reagent including an enzyme for amplification is stored in the amplification cartridge 40 at -20°C, while an extraction reagent or a fluorescence reagent for detection is stored in the reagent cartridge 40 at room temperature. An amount of the reagent required to be stored at a low temperature such as amplification enzymes is smaller, so that the amplification reagent cartridge 40 is smaller than the reagent cartridge 20. It is preferable that the amplification reagent cartridge 40 is provided separately from the reagent cartridge 20, because the there is no need to provide a large space for a refrigerator.

Further, according to the present invention, a plurality of reagent cartridges which require to be stored at different temperatures can individually be subjected to temperature control, so that preparation of the reagents can be simplified.

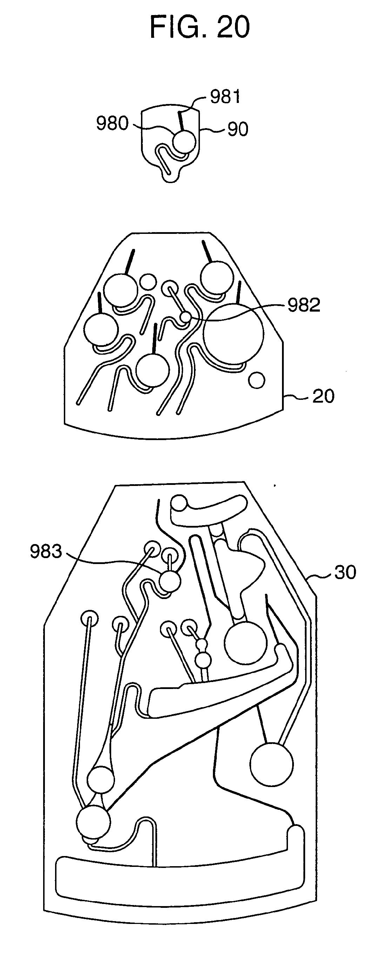

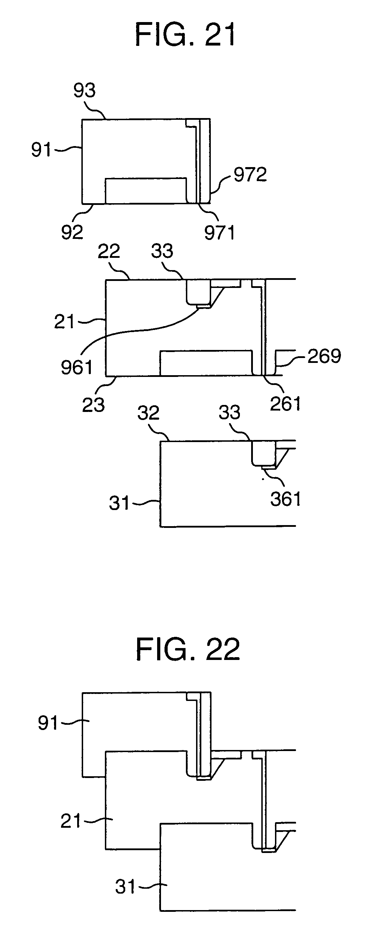

In the embodiment shown in Fig. 19, both the reagent cartridge 20 and the amplification reagent cartridge 40 are directly attached to the testing cartridge 30, however, the same effect can be achieved even when the reagent cartridge 20 is attached to the testing cartridge while the amplification reagent cartridge 90 is attached to the reagent cartridge 20 as shown in Figs. 20 and 22. In the embodiment shown in Fig. 20, the amplification reagent is stored in an amplification reagent chamber 980 of the amplification reagent cartridge 90, and an amplification reagent chamber aeration hole 981 is perforated to allow the amplification reagent to flow. A detection reagent which can be stored at room temperature is stored in a detection reagent chamber 982 of the reagent cartridge 20, and this detection reagent is mixed with the amplification reagent as the amplification reagent pass therethrough. In addition, as the mixture flows through a detection reagent mixing chamber 983 of the testing cartridge 30, the amplification reagent and the ) detection reagent are mixed with each other and flows out.

In this manner, this embodiment comprises a plurality of cartridges corresponding to respective reagents which should be stored at different temperatures respectively, so that it is possible to effectively provide an analyzer containing disposable packages in which reagents are respectively stored at different temperatures.

According to this embodiment, the stock space can be reduced and consequently a space which is required for setting an entire apparatus can also be reduced. And a plurality of the above described reagent cartridges can be mounted. In this embodiment, an amplification reagent cartridge 90 is used as a first reagent cartridge and a reagent cartridge 20 is used as a second reagent cartridge.

For example, the first reagent cartridge can be stored at a low temperature (about -20°C), and is provided with a storing chamber for storing an enzyme (an enzyme used for hybridization at a time of amplification) and the like.

The second reagent cartridge is stored at room temperature (about 50 to 40°C), and can be provided with a storing chamber for storing an extraction reagent and a detection reagent such as fluorescence dyes.

As for the plurality of reagent cartridges, the first reagent cartridge is thus characteristically retained at a lower temperature than the second reagent cartridge before being loaded within the analyzer.

In addition, for example, the first reagent cartridge features its smaller volume compared to the second reagent cartridge. Further, an amount or number of reagents contained within the first reagent cartridge can be reduced compared with an amount or number of reagents contained within the second reagent cartridge.

In addition, the embodiment also features a building-up arrangement of a plurality of reagent cartridges as shown in the figures. For example, the plurality of reagent cartridges feature that the second reagent cartridge is disposed facing toward the testing cartridge 20, and the first reagent cartridge is disposed facing toward the above described second reagent cartridge.

Specifically, the first reagent cartridge is disposed via the above described second reagent cartridge relative to the above described testing cartridge. That is, these cartridges are build up such as a reagent cartridge stored at a low temperature/a reagent cartridge stored at room temperature/a testing cartridge.

In the above described arrangement, a plurality of reagent cartridges are built up. However, these reagent cartridges may also be disposed in parallel facing toward the above described testing cartridge.

For example, the plurality of reagent cartridges feature that the first reagent cartridge is disposed facing toward a first region of the testing cartridge 20, and the second reagent cartridge is disposed facing toward a second region of the testing cartridge 20.

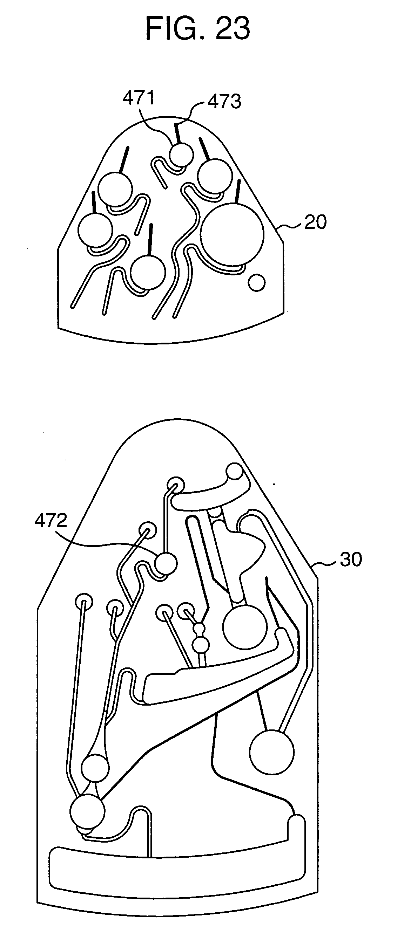

Although the embodiment shown in Fig. 19 comprises an amplification reagent cartridge 40 required to be stored at a low temperature which is fabricated separately from the reagent cartridge 20, it is also possible that a low temperature reagent chamber 472 is provided within the testing cartridge 30, and then the testing cartridge 30 is stored at a low temperature with an amplification reagent such as an enzyme previously retained as shown in Fig. 23, the amplification reagent being also required to be stored at a low temperature. Only a reagent which is not required to be stored at a low temperature may be stored within the reagent cartridge 20, and amplification reagents other than the low temperature reagents may be previously stored within a room temperature amplification reagent chamber 471. A room temperature amplification reagent chamber aeration hole 473 is perforated by the perforator 13 in order to supply air into the room temperature amplification reagent chamber 471, and then the motor 11 is activated. Consequently, the room temperature amplification reagent flows out of the room temperature reagent chamber 471, and then mixed with a low temperature reagent within the low temperature reagent chamber 472 and further flows out.

The above described embodiment features that the testing cartridge 20 having a mixing channel is provided with a reagent chamber for storing a reagent, and is connected to a reagent cartridge 30 for storing a reagent. Thus, the same effect can be achieved while the number of the cartridges is prevented from increasing. Since this arrangement is simple, a structure which is easy to use and simple can be designed.

Another feature is that, for example, a testing cartridge 20 comprises a reagent storing part for storing a reagent, and the testing cartridge 20 is retained at lower temperature than a reagent cartridge 30 before being incorporated into an analyzer body.

For example, the testing cartridge is stored at a low temperature (about -20°C), and an enzyme (an enzyme used for hybridization at a time of amplification) is stored therein as a reagent. The reagent cartridge is stored at room temperature (about 5 to 40°C) in which an extraction reagent and a detection reagent such as a fluorescence dye are stored.

According to the present invention in which the reagent cartridge is fabricated merely separately from the testing cartridge without the need for dividing the reagent cartridge per se even if two kinds of reagents required to be stored at different temperature are retained, the manufacturing costs can be reduced and this apparatus will be easy to use.

According to the present invention, an operation of dispensing the reagent is eliminated and there is no danger of contaminating the reagent due to an inadequacy in the work. In addition, it does not need to provide a valve along the channel in order to control the flow of each reagent, so that the fluid never remains at the valve part within the channel. Therefore, the contamination by the reagents during the front end process can be prevented, and a certain component such as nucleic acid included in the fluid sample can be extracted with high purity and thus can be analyzed with high precision.

According to the present invention, an analyzer and a structure for analysis with high performance are provided, which can reduce contamination between the reagents when the valve components or a plurality of reagents are included.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A chemical analyzer (1) to which a sample is injected and in which a reagent for reacting with said sample is stored, comprising:
a housing part for housing a structure (2) having a reaction region for reacting said sample with said reagent; and
a mechanism for detecting said sample after said reaction,
wherein said structure comprises:
a reagent cartridge (20) having a reagent storing part for storing the reagent;
a connection part to which said reagent cartridge is connected; and
a channel cartridge (30) having a reagent channel through which said reagent flows, a sample channel through which said sample flows, and said reaction region which is in communication with said reagent channel and said sample channel.

2. The chemical analyzer according to claim 1, wherein said structure is rotatably mounted within said housing part, said sample contains nucleic acid, said channel cartridge has a capturing part for capturing the nucleic acid from said sample, and said detection mechanism is disposed at an outside of said structure.

3. The chemical analyzer according to claim 1 or 2, wherein a first storing portion of said reagent storing part of said reagent cartridge communicates with a second storing portion of said reagent storing part of said reagent cartridge via said reagent channel or said sample channel formed in said channel cartridge when said reagent cartridge and said channel cartridge are attached to said housing part.

4. The chemical analyzer according to any of claims 1 to 3, wherein a plurality of said reagent cartridges are provided, and a first reagent cartridge (90) is retained at a lower temperature than a second reagent cartridge (20) before being contained within said housing part.

5. The chemical analyzer according to claim 4, wherein a volume of said first reagent cartridge is smaller than a volume of said second reagent cartridge.

6. The chemical analyzer according to any of claims 1 to 5, wherein said channel cartridge is provided with a reagent storing part for storing a reagent, and said channel cartridge is retained at a lower temperature than said reagent cartridge before being contained within said housing part.

7. The chemical analyzer according to any of claims 1 to 6, wherein a plurality of said reagent cartridges are provided, and a first reagent cartridge is disposed facing toward a first region of said channel cartridge and a second reagent cartridge is disposed facing toward a second region of said channel cartridge.

8. The chemical analyzer according to any of claims 1 to 6, wherein a plurality of said reagent cartridges are provided, and said second reagent cartridge is disposed facing toward said channel cartridge and a first reagent cartridge is disposed facing toward said second reagent cartridge.

9. The chemical analyzer according to any of claims 1 to 8, wherein said channel cartridge is provided with an inlet into which said sample is injected, and said inlet is provided so as to be covered with said reagent cartridge at a time of mounting the reagent cartridge when viewing from a building-up direction

10. A structure for a chemical analysis, comprising:
an introduction part of a sample including a certain chemical substance;
a reagent storing part for ·storing a reagent reacting with said sample; and
a capturing part for capturing said chemical substance from the reagent reacted with said reagent,
wherein said structure comprises a reagent cartridge having reagent storing parts for storing a plurality of reagents, a connection part to which said reagent cartridge can be connected, and a channel cartridge having reagent channels through which said reagents flow, a sample channel through which said sample flows, and said reaction region which is in communication with said reagent channel and said sample channel.

11. A channel structure, comprising:
a connection part which can connect to a reagent structure having a reagent storing part for storing a reagent;
a reagent channel through which said reagent supplied via said connection part flows;
a sample channel through which a sample containing a certain chemical substance flows;
a reaction region through which said reagent channel and said sample channel are in communication with each other; and
a capturing part for capturing said chemical substance from said sample which has reacted with said reagent.

12. A channel structure, comprising:
a connection part which is connectable to a reagent structure having a reagent storing part for storing a reagent and to which the reagent within said reagent storing part is supplied;
an inlet for injecting a sample containing a certain chemical substance;
a separation part for separating a separated sample containing a gene which is a testing object from the sample injected from said inlet;
a first reaction part for introducing a first reagent supplied from a first connecting portion of said connection part and said separated sample to allow them to react with each other;
a gene capturing part for capturing said gene from said separated sample after said reaction;
a washing reagent channel for introducing a washing reagent supplied from a second connecting portion of said connection part into said gene capturing part;
an eluent channel for introducing an eluent supplied from a third connecting portion of said connection part into said gene capturing part; and
a retaining part for retaining said eluted gene.

13. A reagent structure, comprising:
a connection part which is connectable to a channel structure having a reagent channel through which a reagent flows, a sample channel through which a sample containing a certain chemical substance flows, and said reaction region through which said reagent channel and said sample channel are in connection with each other;
a reagent storing part for storing said reagent; and
a channel for introducing said stored reagent into said channel structure.
